# EUROPÄISCHE PATENTANMELDUNG

(11) **EP 1 002 994 A1**
(43) Veröffentlichungstag der Anmeldung: **24.05.2000**
(21) Anmeldenummer: 99121366.1
(22) Anmeldetag: 27.10.1999
(51) Int. Cl.: F23G 1/00, F23L 7/00

(54) **Vorrichtung und Verfahren zur Feuerbestattung**

(30) Priorität: 20.11.1998 DE 19853572
(71) Anmelder: MESSER GRIESHEIM GMBH, 60547 Frankfurt (DE)
(72) Erfinder: Lürken, Franz, Dr., 47906 Kempen (DE); Forjahn, Heinz-Dieter, 47546 Kalkar (DE); Wimmer, Peter, 47906 Kempen (DE)

(57) **Zusammenfassung**

Die Erfindung betrifft eine Vorrichtung und ein Verfahren zur Feuerbestattung von Leichen mit einer Einäscherungskammer (1), mindestens einer Heizvorrichtung (3), mindestens einem Frischgaskanal (4) und mindestens einem Abgaskanal (5). Erfindungsgemäß wird eine vereinfachte, reduzierte Abgaswerte aufweisende Vorrichtung bzw. ein entsprechendes Verfahren zur Feuerbestattung dadurch zur Verfügung gestellt, daß die Heizvorrichtung (3) außerhalb der Einäscherungskammer (1) vorgesehen ist und daß der Frischgaskanal (4) mit einem Sauerstoffspeicher verbunden ist.

## Beschreibung

Die Erfindung betrifft einerseits eine Vorrichtung zur Feuerbestattung von Leichen mit einer Einäscherungskammer, mindestens einer Heizvorrichtung, mindestens einem Frischgaskanal und mindestens einem Abgaskanal und andererseits ein Verfahren zur Feuerbestattung von Leichen bei welchem eine Leiche in einer Einäscherungskammer eingeäschert wird, die Einäscherungskammer mit Hilfe einer Heizvorrichtung beheizt wird, das Frischgas mit Hilfe eines Frischgaskanals in die Einäscherungskammer geführt wird und das Abgas mit Hilfe eines Abgaskanals aus der Einäscherungskammer herausgeführt wird.

Die beschriebenen Vorrichtungen und Verfahren sind aus dem Stand der Technik in einer Ausgestaltung bekannt, in der die in die Einäscherungskammer eingebaute Heizvorrichtung aus einem Brenner besteht, dem über einen Frischgaskanal als Frischgas Umgebungsluft zugeführt wird und bei der das Abgas über einen Abgaskanal abgeführt.

Derartige Vorrichtungen und Verfahren zur Feuerbestattung unterliegen heute verstärkten Anforderungen (TA-Luft, 17. Bundesimmissionsschutzverordnung) zum Schutze der Umwelt. Dies bedeutet, daß es für die Belastung des Abgases mit Schadstoffen Höchstwerte gibt, die nicht überschritten werden dürfen. Nach dem Stand der Technik wird das in den Kamin entlassene Abgas regelmäßig einer Rauchgasreinigung unterworfen. Eine solche Rauchgasreinigung ist oft aus Raumgründen in den vorhandenen Anlagen, die nachgerüstet werden müssen, nicht möglich. Die Nachrüstung bestehender Anlagen ist oft auch deshalb sehr problematisch bis unmöglich, weil die vorhandenen Krematorien unter Denkmalschutz stehen, so daß bauliche Veränderungen oft nur schwer oder gar nicht realisierbar sind.

Außerdem entstehen bei Beginn des Verbrennungsvorganges durch die Verbrennung des regelmäßig mitverbrannten Sarges, der aus Holz besteht, große Mengen Kohlenmonoxid, da infolge des vorgegebenen Anteils von Sauerstoff an der zur Verbrennung eingesetzten natürlichen Luft die Sauerstoffmenge, die zur vollständigen Verbrennung des während dieser Phase des Verbrennungsvorgangs anfallenden Kohlenstoffs erforderlich wäre, nicht zur Verfügung steht, obwohl hier im Stand der Technik mit Luftzahlen von bis zu 3,5 gearbeitet wird. Es werden also zu Beginn der Verbrennung große Frachten an unverbranntem CO freigesetzt. Dies ist deshalb besonders nachteilig, da das Vorhandensein von CO die Bildung krebserregender Dibenzofurane und Dibenzodioxine fördert.

Die thermische Leistung der bekannten Vorrichtungen zur Feuerbestattung beträgt typischerweise etwa 550-600 KW, was in etwa einer reinen Leistung von 60 Normkubikmeter (Nm³) Erdgas pro Stunde entspricht. Dies bedeutet, daß bei einer Luftzahl von 3,5 pro Stunde ca. 2200 Nm³ Rauchgas produziert werden. Entsprechend groß müssen die nachgeschalteten Rauchgasreinigungskomponenten dimensioniert werden, was aus den oben beschriebenen Gründen zumindest problematisch häufig aber sogar unmöglich ist.

Ein weiteres Problem des Abgases besteht ganz generell darin, daß bei Verbrennung unter Einsatz natürlicher Luft wegen des hohen Stickstoffanteils der Luft (ca. 75%) Stickoxide (NOₓ) entstehen, und zwar insbesondere bei hoher Luftzahl. Diese Stickoxide sind zumindest zum Teil in hohem Maße gesundheitsgefährdend und machen eine Abgasnachreinigung erforderlich.

Eine Vorrichtung bzw. ein Verfahren welches die beschriebenen Probleme bei der Feuerbestattung zumindest teilweise löst, ist aus der DE 196 28 741 Al bekannt. Bei diesem Verfahren erfolgt die Verbrennung in der Einäscherungskammer ohne Zufuhr natürlicher Luft, wobei mindestens die Hälfte des die Einäscherungskammer verlassenden Rauchgases ungekühlt zur Bildung eines Rauchgaskreislaufes der Einäscherungskammer wieder zugeführt wird und bei dem im Rauchgaskreislauf dem Rauchgas Sauerstoff zugemischt wird. Bei dieser Vorrichtung bzw. diesem Verfahren ist wiederum problematisch, daß die Führung der Abgase in der Einäscherungskammer kompliziert ist und darüber hinaus der in der Einäscherungskammer befindliche Brenner die Abgaswerte negativ beeinflußt.

Im Ergebnis liegt der Erfindung also die Aufgabe zugrunde, eine Vorrichtung bzw. ein Verfahren zur Feuerbestattung zur Verfügung zu stellen, welche/welches die Einäscherung von Leichen bei geringem Platzbedarf und niedriger Belastung der Abgase ermöglicht.

Gemäß einer ersten Lehre der Erfindung ist die zuvor hergeleitete und aufgezeigte Aufgabe für eine Vorrichtung zur Feuerbestattung von Leichen dadurch gelöst, daß die Einäscherung in einer 2-stufigen Verbrennung geschieht, wobei die Heizvorrichtung außerhalb der Einäscherungskammer vorgesehen ist und die Frischgaskanäle mit einem Sauerstoffspeicher oder Erzeuger verbunden sind. Durch die indirekte Beheizung der Einäscherungskammer über eine außerhalb der Einäscherungskammer vorgesehenen Heizvorrichtung ist gewährleistet, daß eventuell anfallende Abgase der Heizvorrichtung, z.B. einer Erdgasheizung, ungefiltert abgeblasen werden können. Dadurch, daß der Frischgaskanal mit einem Sauerstoffspeicher verbunden ist wird darüber hinaus gewährleistet, daß eine Einäscherung der Leiche bei abgeschalteter Heizvorrichtung möglich wird. Dies sorgt einerseits für einen geringen Energieverbrauch und andererseits für weniger stark belastete Abgase. Darüber hinaus ist die Abgasmenge durch die Verbrennung unter weitgehendem Ausschluß von Stickstoff minimiert. Im Ergebnis kann das Volumen einer Abgasanlage gegenüber herkömmlichen Vorrichtungen zur Feuerbestattung um ca. 80% verringert werden.

Eine völlig immissionsfreie Beheizung der Einäscherungskammer kann bei der Vorrichtung gemäß der ersten Lehre der Erfindung dadurch gewährleistet werden, daß die Heizvorrichtung als elektrische Heizvorrichtung ausgeführt ist.

Wird die Vorrichtung gemäß der ersten Lehre der Erfindung so betrieben, daß die Verbrennungstemperatur über die Zufuhr von Sauerstoff über den Frischgaskanal geregelt wird, führt dies zu einer unterstöchiometrischen Verbrennung. Die zweite Stufe der Verbrennung, die auch als erste Abgasreinigung angesehen werden kann, erfolgt in diesem Fall besonders vorteilhaft dergestalt, daß in der Einäscherungskammer oder im Abgaskanal ein beheizbarer Nachverbrennungskanal vorgesehen ist und daß im Nachverbrennungskanal eine mit dem Sauerstoffspeicher verbundene Sauerstoffeinspeisevorrichtung vorgesehen ist.

Die hinreichende Beheizung des Nachverbrennungskanals kann beispielsweise bereits über den Einbau in die Einäscherungskammer gewährleistet werden. Die Nachverbrennung der Abgase durch Sauerstoffeinspeisung gewährleistet insbesondere die Einhaltung der Abgaswerte nach der 17. Bundesimmissionsschutzverordnung.

Um eine Regelung der Temperatur insbesondere für den Fall, in dem die Temperatur über die Sauerstoffzufuhr geregelt wird, zu gewährleisten, sind in der Einäscherungskammer Temperaturmeßelemente vorgesehen.

Gemäß einer zweiten Lehre der Erfindung ist die oben hergeleitete und aufgezeigte Aufgabe für ein Verfahren zur Feuerbestattung von Leichen dadurch gelöst, daß die Einäscherungskammer mit Hilfe der Heizvorrichtung von außen beheizt wird und daß als Frischgas Sauerstoff in hoher Konzentration zugeführt wird.

Als Sauerstoff in hoher Konzentration ist hier ein Sauerstoffgasgemisch zu verstehen, welches einen Sauerstoffanteil deutlich oberhalb des Anteils von Sauerstoff in Luft enthält. Vorzugsweise wird reiner Sauerstoff verwendet.

Um ein zügiges Ingangsetzen des Einäscherungsprozesses zur gewährleisten, wird die Einäscherungskammer vor der Beschickung vorgeheizt.

Zur Vermeidung des unerwünschten Austritts von reinem Sauerstoff über die Abgasleitung wird erst nach der Beschickung der Einäscherungskammer mit einer Leiche mit der Zufuhr von Sauerstoff in die Einäscherungskammer begonnen.

Zur Reduzierung des Energieverbrauches wird die Heizvorrichtung nach dem Beginn der Zufuhr von Sauerstoff abgeschaltet.

Die Einstellung einer konstanten Einäscherungstemperatur erfolgt nach der Abschaltung der Heizvorrichtung über die Sauerstoffzufuhr.

Es gibt nun eine Vielzahl von Möglichkeiten, die erfindungsgemäße Vorrichtung bzw. das erfindungsgemäße Verfahren auszugestalten und weiterzubilden. Hierzu wird beispielsweise verwiesen einerseits auf die den Patentansprüchen 1 und 5 nachgeordneten Patentansprüche andererseits auf die Beschreibung eines Ausführungsbeispiels in Verbindung mit der Zeichnung. In der Zeichnung zeigt
- Fig. 1: ein Ausführungsbeispiel einer erfindungsgemäßen Vorrichtung zur Feuerbestattung in einem Längsschnitt und
- Fig. 2: das Ausführungsbeispiel einer erfindungsgemäßen Vorrichtung zur Feuerbestattung in einem zweigeteilten Querschnitt.

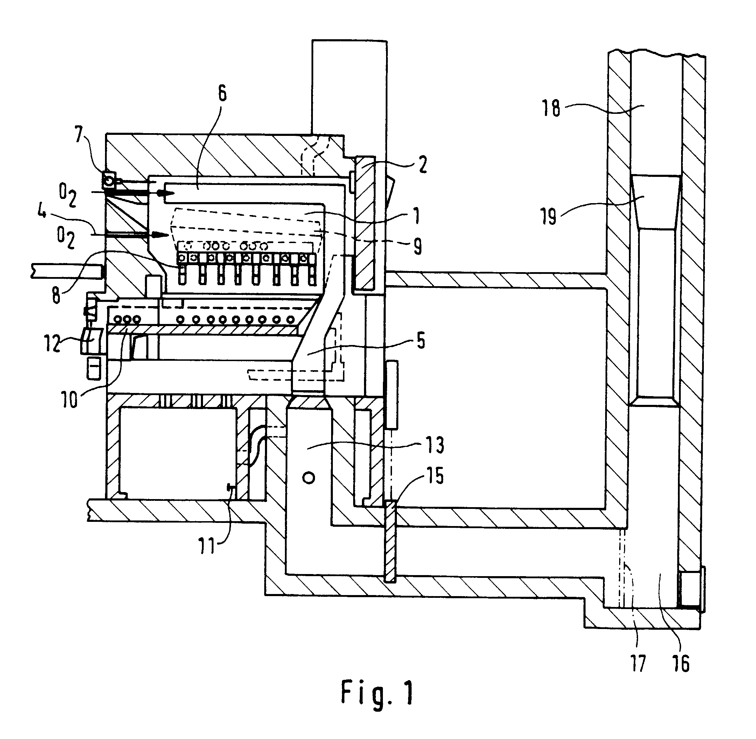

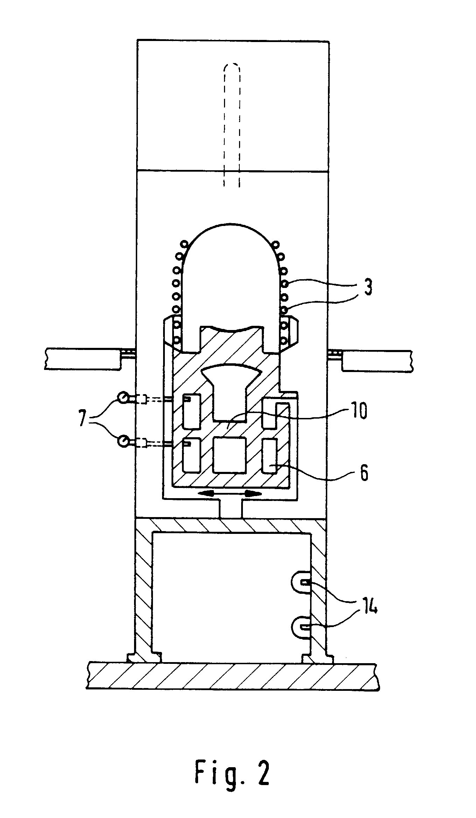

Das in Fig. 1 dargestellte Ausführungsbeispiel einer erfindungsgemäßen Vorrichtung zur Feuerbestattung von Leichen weist eine Einäscherungskammer 1 mit einer Ofentüre 2 auf. Diese wird vorzugsweise als Schleusendoppeltür ausgeführt, mit der Möglichkeit eine Inertisierung der Schleusenkammer vorzunehmen. Wie in Fig. 2 dargestellt ist, weist die Vorrichtung darüber hinaus elektrische Heizvorrichtungen 3 zur Beheizung der Einäscherungskammer 1 auf. In die Einäscherungskammer mündet sowohl ein Frischgaskanal 4 als auch ein Abgaskanal 5.
Erfindungsgemäß sind die elektrischen Heizvorrichtungen 3 außerhalb der Einäscherungskammer 1 angeordnet und ist der Frischgaskanal 4 mit einem nicht dargestellten Sauerstoffspeicher oder O₂-Erzeuger zur Einleitung von reinem Sauerstoff verbunden.

Eine erste Abgasreinigung wird über einen, in Fig. 1 dargestellten, in der Einäscherungskammer 1 angeordneten Nachverbrennungskanal 6 gewährleistet, der mit dem Abgaskanal 5 verbunden ist. Im Nachverbrennungskanal 6 ist eine ebenfalls mit dem nicht dargestellten Sauerstoffspeicher oder 02-Erzeuger verbundene nicht dargestellte Sauerstoffeinspeisevorrichtung vorgesehen.

Die gewünschte Temperaturregelung in der Einäscherungskammer 1 wird über in der Wand der Einäscherungskammer 1 vorgesehene Temperaturmeßelemente 7 gewährleistet.

Neben Auflageelementen 8 für den gestrichelt dargestellten Sarg 9 weist das in den Fig. 1 und 2 dargestellte Ausführungsbeispiel einer erfindungsgemäßen Vorrichtung zur Feuerbestattung weiter eine in das Temperaturmeßelement 7 integrierte Drucküberwachung, eine Aschenplatte 10, weitere Temperaturmeßelemente 11 und eine Aschenentnahme 12 auf.

Schließlich ist ein Rauchfuchs 13, aus Fig. 2 ersichtlich, mehrere Flammen- und Grauwert-Überwachungen 14, ein Kaminschieber 15, eine Entspannungskammer 16 mit Kettenvorhang 17, ein Kamin 18 mit zugehörigem Injektorrohr 19 sowie nicht dargestellte Adsorber und Filter für eine zweite Abgasreinigung vorgesehen.

Die Funktionen dieser angesprochenen Bauteile sind dem Fachmann aus dem Stand der Technik bekannt.

## Patentansprüche

1. Vorrichtung zur Feuerbestattung von Leichen mit mindestens einer Einäscherungskammer (1), mindestens einer Heizvorrichtung (3), mindestens einem Frischgaskanal (4) und mindestens einem Abgaskanal (5) mit Nachverbrennung
dadurch gekennzeichnet,
daß die Heizvorrichtung (3) außerhalb der Einäscherungskammer (1) vorgesehen ist und daß sowohl der Frischgaskanal (4) als auch der Abgaskanal (6) mit einem Sauerstoffspeicher verbunden ist.

2. Vorrichtung nach Anspruch 1,
dadurch gekennzeichnet,
daß die Heizvorrichtung (3) als elektrische Heizvorrichtung ausgeführt ist.

3. Vorrichtung nach Anspruch 1 oder 2,
dadurch gekennzeichnet,
daß der Abgaskanal (6) zumindest teilweise in der Einäscherungskammer (1) angeordnet ist.

4. Vorrichtung nach einem der Ansprüche 1 bis 3,
dadurch gekennzeichnet,
daß in der Einäscherungskammer (1) oder im Abgaskanal (5) ein beheizbarer Nachverbrennungskanal (6) vorgesehen ist und daß im Nachverbrennungskanal (6) eine mit dem Sauerstoffspeicher verbundene Sauerstoffeinspeisevorrichtung vorgesehen ist.

5. Vorrichtung nach einem der Ansprüche 1 bis 4,
dadurch gekennzeichnet,
daß in der Einäscherungskammer (1) Temperaturmeßelemente (7) vorgesehen sind.

6. Verfahren zur Feuerbestattung von Leichen bei welchem Leichen in einer Einäscherungskammer eingeäschert werden, die Einäscherungskammer mit Hilfe einer Heizvorrichtung beheizt wird, das Frischgas mit Hilfe eines Frischgaskanals in die Einäscherungskammer geführt wird und daß Abgas mit Hilfe eines Abgaskanals aus der Einäscherungskammer herausgeführt wird, insbesondere zur Verwirklichung in Verbindung mit einer Vorrichtung nach einem der Ansprüche 1 bis 5,
dadurch gekennzeichnet,
daß die Einäscherungskammer mit Hilfe der Heizvorrichtung von außen beheizt wird und daß als Frischgas Sauerstoff in hoher Konzentration in die Einäscherungskammer und Nachverbrennung getrennt zugeführt werden.

7. Verfahren nach Anspruch 6,
dadurch gekennzeichnet,
daß die Einäscherungskammer vor der Beschickung vorgeheizt wird.

8. Verfahren nach Anspruch 6,
dadurch gekennzeichnet,
daß erst nach der Beschickung der Einäscherungskammer mit der Zufuhr von Sauerstoff begonnen wird.

9. Verfahren nach einem der Ansprüche 6 bis 8,
dadurch gekennzeichnet,
daß die Heizvorrichtung nach dem Beginn der Zufuhr von Sauerstoff abgeschaltet wird.

10. Verfahren nach Anspruch 9,
dadurch gekennzeichnet,
daß die Einäscherungstemperatur und auch Geschwindigkeit über die Sauerstoffzufuhr eingestellt wird.
